# EUROPEAN PATENT APPLICATION

(11) **EP 4 006 435 A1**
(43) Date of publication of application: **01.06.2022**
(21) Application number: 19940116.7
(22) Date of filing: 31.07.2019
(51) Int. Cl.: F24F 7/007, F24F 11/77, F24F 140/00

(54) **VENTILATION DEVICE AND CONTROL METHOD FOR VENTILATION DEVICE**

(71) Applicant: MITSUBISHI ELECTRIC CORPORATION, Chiyoda-ku Tokyo 100-8310 (JP)
(72) Inventor: NAGATA, Fukutaro, Tokyo 100-8310 (JP); MIYAZAKI, Yuki, Tokyo 100-8310 (JP); KATO, Shinya, Tokyo 102-0073 (JP)
(74) Representative: Witte, Weller & Partner Patentanwälte mbB
(86) International application number: PCT/JP2019/030014
(87) International publication number: WO 2021/019729

(57) **Abstract**

A ventilation apparatus includes a voltage value calculator (33) that acquires a voltage value associated with an operating air volume on which the ventilation apparatus is instructed and a pressure loss in an environment where the ventilation apparatus is installed by referring to relationships between an operating air volume preset in the ventilation apparatus, a pressure loss in a flow passage through which air flow moves, and a voltage applied to the motor, and calculates a command value of the voltage, and a bias value instruction unit (38) that provides an instruction on a bias value that is a voltage adjustment amount for air volume adjustment from the operating air volume on which the ventilation apparatus is instructed. The voltage value calculator (33) calculates the command value by adjusting the acquired voltage value based on the bias value.

## Description

### Field

The present invention relates to a ventilation apparatus that ventilates a room by generating air flow, and a method of controlling the ventilation apparatus.

### Background

Some ventilation apparatuses each connected to a duct connecting the inside and outside of a room for ventilating the room by causing air in the duct to flow, perform automatic control to keep air volume constant to address a problem such as changes in air volume due to the effect of the state of the duct.

Patent Literature 1 discloses a ventilation apparatus including a fan that generates air flow by the drive of a motor, in which the applied voltage of the motor is controlled according to a difference between the result of detection of the number of revolutions of the motor and the number of revolutions stored in a storage means. The number of revolutions is the number of revolutions per unit time and is also referred to as a rotational speed. The ventilation apparatus of Patent Literature 1 stores in read-only memory (ROM) the numbers of revolutions for providing preset operating air volumes at each applied voltage, and controls the applied voltage according to a difference between the number of revolutions stored and the current number of revolutions. By controlling the applied voltage so that an actual air volume becomes closer to a specified operating air volume, the ventilation apparatus of Patent Literature 1 can operate at a constant air volume even if the pressure loss of the duct changes.

### Citation List

### Patent Literature

Patent Literature 1: Japanese Patent Application Laid-open No. H5-146189

### Summary

### Technical Problem

In the case of the conventional technique disclosed in Patent Literature 1, the ventilation apparatus can keep air volume constant for a preset operating air volume, but cannot finely adjust air volume from a preset operating air volume. For example, in a situation where ventilation volume when the ventilation apparatus is operated at a certain operating air volume falls slightly short of a required ventilation volume, the ventilation apparatus cannot perform adjustment such as slightly increasing the number of revolutions from the number of revolutions stored in the ROM to slightly increase air volume from the operating air volume. To provide the required ventilation volume, the ventilation apparatus needs to switch air volume to an operating air volume higher than the operating air volume of the preset operating air volumes to operate. A plurality of operating air volumes is typically set in stages in the ventilation apparatus. Thus, by switching air volume to increase air volume, the ventilation apparatus operates at an air volume excessively larger than an air volume that can provide the required ventilation volume. As described above, according to the conventional technique, the ventilation apparatus, which cannot finely adjust air volume from a preset operating air volume, has a problem in that operation at an excessive air volume is sometimes required.

The present invention has been made in view of the above. It is an object of the present invention to provide a ventilation apparatus that allows a fine adjustment of air volume from an operating air volume preset in the ventilation apparatus.

### Solution to Problem

In order to solve the above-described problem and achieve the object, a ventilation apparatus according to the present invention includes a fan that generates air flow by the drive of a motor, and ventilates a room by generating the air flow. The ventilation apparatus according to the present invention includes a voltage value calculator that acquires a voltage value associated with an operating air volume on which the ventilation apparatus is instructed and a pressure loss in an environment where the ventilation apparatus is installed by referring to relationships between an operating air volume preset in the ventilation apparatus, a pressure loss in a flow passage through which the air flow moves, and a voltage applied to the motor, and calculates a command value of the voltage, and a bias value instruction unit that provides an instruction on a bias value that is a voltage adjustment amount for air volume adjustment from the operating air volume on which the ventilation apparatus is instructed. The voltage value calculator calculates the command value by adjusting the acquired voltage value based on the bias value.

### Advantageous Effects of Invention

The ventilation apparatus according to the present invention has the effect of allowing a fine adjustment of air volume from an operating air volume preset in the ventilation apparatus.

### Brief Description of Drawings

FIG. 1 is a diagram illustrating a schematic configuration of a ventilation apparatus according to a first embodiment of the present invention.
FIG. 2 is a block diagram illustrating a hardware configuration included in the ventilation apparatus illustrated in FIG. 1.
FIG. 3 is a block diagram illustrating a functional configuration included in the ventilation apparatus illustrated in FIG. 1.
FIG. 4 is a diagram illustrating an example of the relationships between a voltage, an air volume, a pressure loss, and the number of revolutions in the ventilation apparatus illustrated in FIG. 1.
FIG. 5 is a diagram illustrating an example of the relationship between the voltage and the pressure loss in the ventilation apparatus illustrated in FIG. 1.
FIG. 6 is a diagram illustrating an example of the relationships between the operating air volume, the pressure loss, and the voltage in the ventilation apparatus illustrated in FIG. 1.
FIG. 7 is a flowchart illustrating an operating procedure performed by the ventilation apparatus illustrated in FIG. 1 at the time of installation of the ventilation apparatus.
FIG. 8 is a flowchart illustrating an operating procedure performed by the ventilation apparatus illustrated in FIG. 1 at the time of operation for ventilation.
FIG. 9 is a diagram for explaining operating point changes caused by the setting of a bias value to the ventilation apparatus illustrated in FIG. 1.
FIG. 10 is a flowchart for explaining a modification of the operation by the ventilation apparatus illustrated in FIG. 1.
FIG. 11 is a diagram illustrating an example of the relationships between an operating air volume, a voltage, and the number of revolutions in the ventilation apparatus illustrated in FIG. 1.
FIG. 12 is a diagram illustrating a schematic configuration of a ventilation apparatus according to a second embodiment of the present invention.

### Description of Embodiments

Hereinafter, a ventilation apparatus and a method of controlling the ventilation apparatus according to embodiments of the present invention will be described in detail with reference to the drawings. Note that the embodiments are not intended to limit the invention.

### First Embodiment.

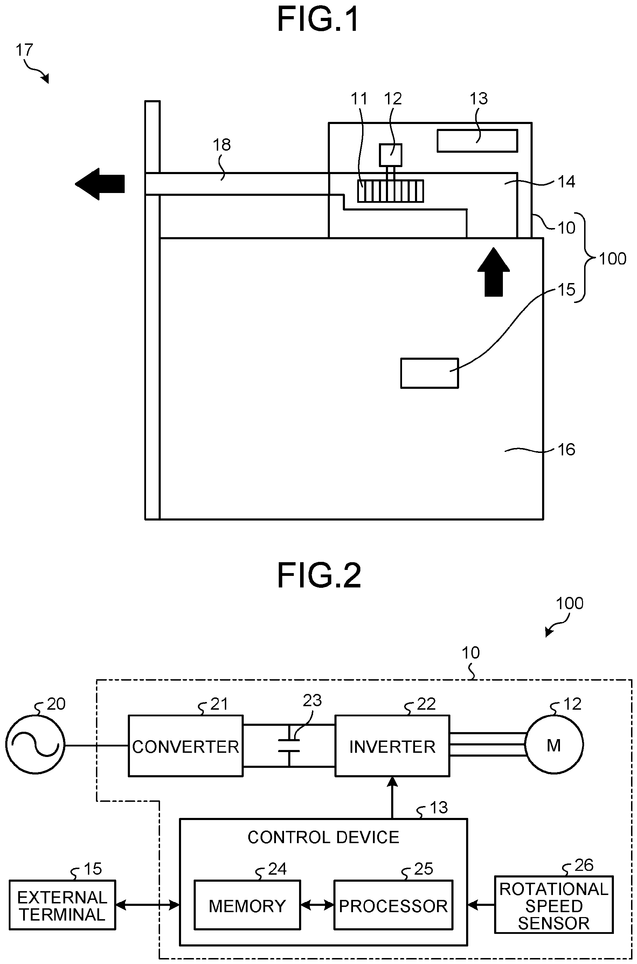

FIG. 1 is a diagram illustrating a schematic configuration of a ventilation apparatus according to a first embodiment of the present invention. A ventilation apparatus 100 generates air flow, thereby taking in air from the inside of a room 16 and sending out the air taken in to a duct 18. The duct 18 is provided in a ceiling space of the building and connects the inside of the room 16 and the outside 17. The ventilation apparatus 100 sends out air in the room 16 to the outside 17 via the duct 18, thereby ventilating the room 16. The ventilation apparatus 100 maintains a comfortable air environment in the room 16 by ventilating the room 16.

The ventilation apparatus 100 includes a main body 10 and an external terminal 15. The main body 10 is installed in the ceiling space. The main body 10 includes a fan 11 equipped with a motor 12 and a control device 13. The fan 11 is provided in an air passage 14 in the main body 10. The fan 11 generates air flow by the drive of the motor 12. The control device 13 controls the entire ventilation apparatus 100.

The external terminal 15 is a remote controller operated by a person in the room 16. The external terminal 15 accepts operation start and operation stop instructions and an air volume instruction. The control device 13 controls operation start and stop and air volume switching according to instructions transmitted from the external terminal 15.

FIG. 2 is a block diagram illustrating a hardware configuration included in the ventilation apparatus illustrated in FIG. 1. FIG. 2 illustrates a hardware configuration for driving the motor 12 in the ventilation apparatus 100. A commercial power supply 20 outputs a single-phase AC voltage to the ventilation apparatus 100. A converter 21, an inverter 22, and a capacitor 23 are connected between the commercial power supply 20 and the motor 12.

The converter 21 converts the AC voltage into a DC voltage by rectifying action. The capacitor 23 smooths the DC voltage output from the converter 21. The inverter 22 converts the DC voltage output from the capacitor 23 into a three-phase AC voltage. The inverter 22 includes a switching circuit that applies the AC voltage to the motor 12.

A rotational speed sensor 26 detects the number of revolutions of the motor 12. The rotational speed sensor 26 outputs the result of detection of the number of revolutions to the control device 13. The control device 13 outputs a drive signal to the inverter 22, thereby controlling the drive of the motor 12. The control device 13 includes a memory 24 and a processor 25 that is a processing circuitry for executing programs stored in the memory 24. The processor 25 executes the programs, thereby executing processing based on information held in the memory 24.

The processor 25 is a central processing unit (CPU). The processor 25 may be a processing unit, an arithmetic unit, a microprocessor, a microcomputer, or a digital signal processor (DSP). The functions of the control device 13 are implemented by the processor 25 and software, firmware, or a combination of software and firmware. The memory 24 is nonvolatile or volatile semiconductor memory, and is random-access memory (RAM), ROM, flash memory, an erasable programmable read-only memory (EPROM), or an electrically erasable programmable read-only memory (EEPROM) (registered trademark). The memory 24 includes an external storage device for holding information. The control device 13 includes an interface for communication with the external terminal 15. In FIG. 2, the interface is not illustrated.

All or part of the functions of the control device 13 may be implemented on hardware using wired logic. The processing circuitry for implementing the functions of the control device 13 may be a single circuit, a combined circuit, a programmed processor, a parallel-programmed processor, an application-specific integrated circuit (ASIC), a field-programmable gate array (FPGA), or a combination of them.

The external terminal 15 includes an input device for the input of various types of information and an interface for communication with the control device 13. The input device is a device such as input keys or a touch panel. The external terminal 15 includes a display device that displays information on operating conditions, a memory that holds information, and processing circuitry that performs various types of processing. In FIG. 2, the input device, the interface, the display device, the memory, and the processing circuitry are not illustrated.

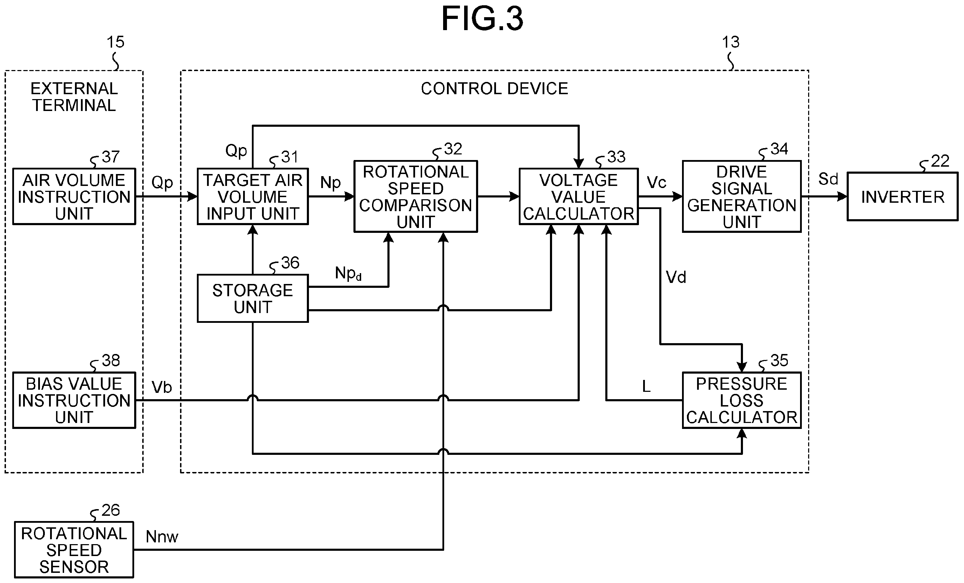

FIG. 3 is a block diagram illustrating a functional configuration included in the ventilation apparatus illustrated in FIG. 1. FIG. 3 illustrates a functional configuration for driving the motor 12 in the ventilation apparatus 100. The control device 13 includes a target air volume input unit 31 to which a target air volume Qp is input, a rotational speed comparison unit 32 that compares a target number of revolutions Np with a current number of revolutions Nnw, a voltage value calculator 33 that calculates a voltage command value Vc, a drive signal generation unit 34 that generates a drive signal Sd, a pressure loss calculator 35 that calculates a pressure loss L, and a storage unit 36 that holds information.

The functions of the rotational speed comparison unit 32, the voltage value calculator 33, the drive signal generation unit 34, and the pressure loss calculator 35 are implemented using the processor 25. The function of the target air volume input unit 31 is implemented using the processor 25 and the interface. The function of the storage unit 36 is implemented using the memory 24.

The external terminal 15 includes an air volume instruction unit 37 that provides an instruction on the target air volume Qp, and a bias value instruction unit 38 that provides an instruction on a bias value Vb. The air volume instruction unit 37 accepts an operation for selecting an operation mode from a plurality of operation modes for performing ventilation at different air volumes. The air volume instruction unit 37 provides an instruction on an air volume corresponding to the selected operation mode as the target air volume Qp. The bias value Vb indicates an adjustment amount for adjusting air volume. The functions of the air volume instruction unit 37 and the bias value instruction unit 38 are implemented using the input device and the interface.

Here, the operation of each unit when the ventilation apparatus 100 performs ventilation will be described. A plurality of operating air volumes is preset in the ventilation apparatus 100. The plurality of operating air volumes is set in stages. A user operating the external terminal 15 operates the input device of the external terminal 15 to select one of the plurality of operating air volumes. When one of the plurality of operating air volumes is selected, the air volume instruction unit 37 instructs the ventilation apparatus 100 to operate at the selected operating air volume. The air volume instruction unit 37 transmits an air volume instruction indicating the target air volume Qp, which is the selected operating air volume, to the control device 13. Operation when the bias value Vb is set will be described later.

The target air volume input unit 31 receives the instruction on the target air volume Qp. The target air volume input unit 31 refers to the storage unit 36, thereby acquiring the target number of revolutions Np that is the number of revolutions associated with the target air volume Qp. The target air volume input unit 31 outputs the acquired target number of revolutions Np to the rotational speed comparison unit 32. The rotational speed sensor 26 detects the current number of revolutions Nnw and outputs the value of the current number of revolutions Nnw to the rotational speed comparison unit 32. The rotational speed comparison unit 32 compares the target number of revolutions Np with the current number of revolutions Nnw and outputs the comparison result to the voltage value calculator 33. The voltage value calculator 33 generates the voltage command value Vc so as to bring the current number of revolutions Nnw closer to the target number of revolutions Np. The voltage value calculator 33 outputs the generated command value Vc to the drive signal generation unit 34. The drive signal generation unit 34 generates the drive signal Sd according to the command value Vc and outputs the drive signal Sd to the inverter 22. The drive signal Sd is a control signal such as a pulse width modulation signal.

Next, the operation of each unit when the ventilation apparatus 100 is installed will be described. Assuming that the ventilation apparatus 100 is installed in environments with various pressure losses, at the time of manufacturing of the ventilation apparatus 100, the relationship between a voltage applied to the motor 12 and a pressure loss is measured at each preset operating air volume. Data obtained by the measurement is stored in the storage unit 36.

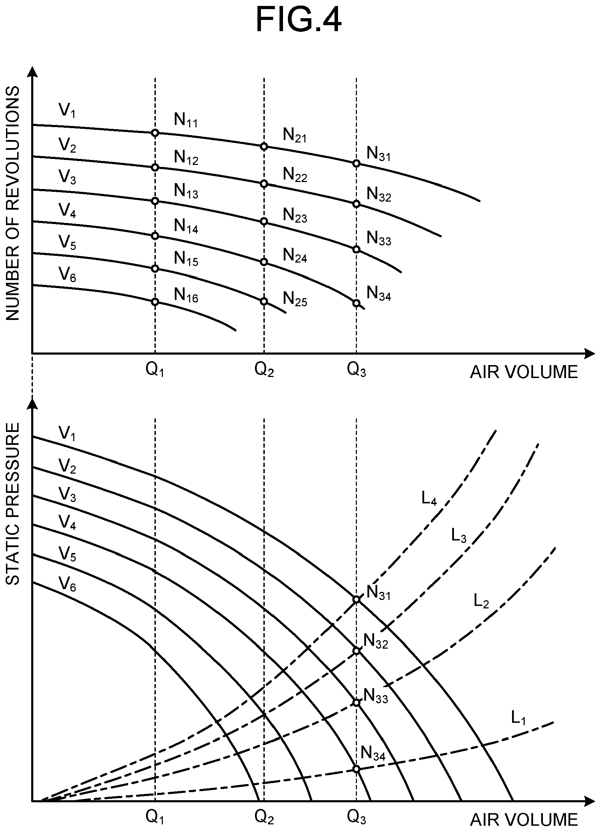

FIG. 4 is a diagram illustrating an example of the relationships between a voltage, an air volume, a pressure loss, and the number of revolutions in the ventilation apparatus illustrated in FIG. 1. FIG. 4 illustrates a graph showing the relationship between the number of revolutions and an air volume, and a graph showing the relationship between a static pressure and an air volume. As the graph showing the relationship between the number of revolutions and the air volume, a graph with voltage values being values of V₁, V₂, V₃, V₄, V₅, and V₆ is illustrated. As the graph showing the relationship between the static pressure and the air volume, a graph with voltage values being values of V₁, V₂, V₃, V₄, V₅, and V₆ is illustrated. V₁, V₂, V₃, V₄, V₅, and V₆ are any voltage values satisfying V₁>V₂>V₃>V₄>V₅>V₆. The storage unit 36 is not limited to the storage of data on each of the six voltage values. Data on each of five or less voltage values may be stored, or data on each of more than six voltage values may be stored.

Q₁, Q₂, and Q₃ are operating air volumes preset in the ventilation apparatus 100 and satisfy Q₁<Q₂<Q₃. The ventilation apparatus 100 is not limited to the setting of the three operating air volumes Q₁, Q₂, and Q₃. Two or less operating air volumes or more than three operating air volumes may be set.

N₁₁, N₁₂, N₁₃, N₁₄, N₁₅, and N₁₆ are the numbers of revolutions of the motor 12 when the ventilation apparatus 100 is operated at the operating air volume Q₁ with the voltages V₁, V₂, V₃, V₄, V₅, and V₆ applied to the motor 12, respectively. N₂₁, N₂₂, N₂₃, N₂₄, and N₂₅ are the numbers of revolutions of the motor 12 when the ventilation apparatus 100 is operated at the operating air volume Q₂ with the voltages V₁, V₂, V₃, V₄, and V₅ applied to the motor 12, respectively. N₃₁, N₃₂, N₃₃, and N₃₄ are the numbers of revolutions of the motor 12 when the ventilation apparatus 100 is operated at the operating air volume Q₃ with the voltages V₁, V₂, V₃, and V₄ applied to the motor 12, respectively.

Together with the graph showing the relationship between the static pressure and the air volume, FIG. 4 illustrates graphs showing pressure losses L₁, L₂, L₃, and L₄ in a flow passage through which air flows. L₁, L₂, L₃, and L₄ satisfy L₁<L₂<L₃<L₄ at a constant air volume. According to the relationships illustrated in FIG. 4, for example, when operation is performed at the operating air volume Q₃ by the application of the voltage V₃ in an environment where the pressure loss is L₂, the number of revolutions is N₃₃.

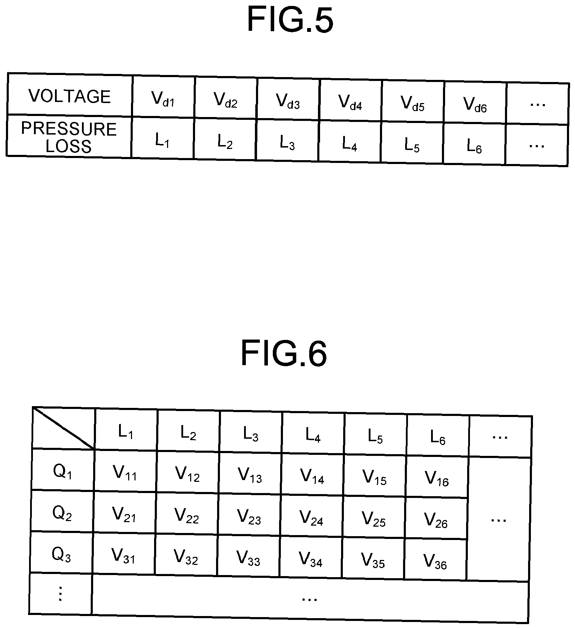

FIG. 5 is a diagram illustrating an example of the relationship between the voltage and the pressure loss in the ventilation apparatus illustrated in FIG. 1. FIG. 5 illustrates data in which voltage values and pressure loss values are associated with each other when the number of revolutions is a specific number of revolutions Np_{d}. The data illustrated in FIG. 5 is acquired on the basis of the relationships illustrated in FIG. 4. The data illustrated in FIG. 5 is acquired for each operating air volume and stored in the storage unit 36. The value of the number of revolutions Np_{d} is also stored in the storage unit 36. The relationship represented by the data in FIG. 5 is used to calculate pressure loss L₁, L₂, ... in an environment where the ventilation apparatus 100 is installed, based on voltage V_{d1}, V_{d2},... at the specific number of revolutions Np_{d}. The data in which the voltage values and the pressure loss values are associated with each other may not be acquired for each operating air volume. It is sufficient that the data in which the voltage values and the pressure loss values are associated with each other be data on a constant number of revolutions Np_{d} at a certain air volume. For the air volume, the larger the maximum value of the voltage value that can be ordered by the drive signal, the higher the resolution of the pressure loss, and thus the higher accuracy calculation of the pressure loss becomes possible.

FIG. 6 is a diagram illustrating an example of the relationships between the operating air volume, the pressure loss, and the voltage in the ventilation apparatus illustrated in FIG. 1. FIG. 6 illustrates data in which operating air volume values, pressure loss values, and voltage values are associated with each other. The data illustrated in FIG. 6 is acquired on the basis of the relationships illustrated in FIG. 4. The data illustrated in FIG. 6 is stored in the storage unit 36. The relationships illustrated in FIG. 6 are used to calculate a voltage value V₁₁, V₁₂,..., V₂₁, V₂₂,..., V₃₁, V₃₂, ... when operation is performed at each operating air volume Q₁, Q₂,... correspondingly with respect to the calculated pressure loss.

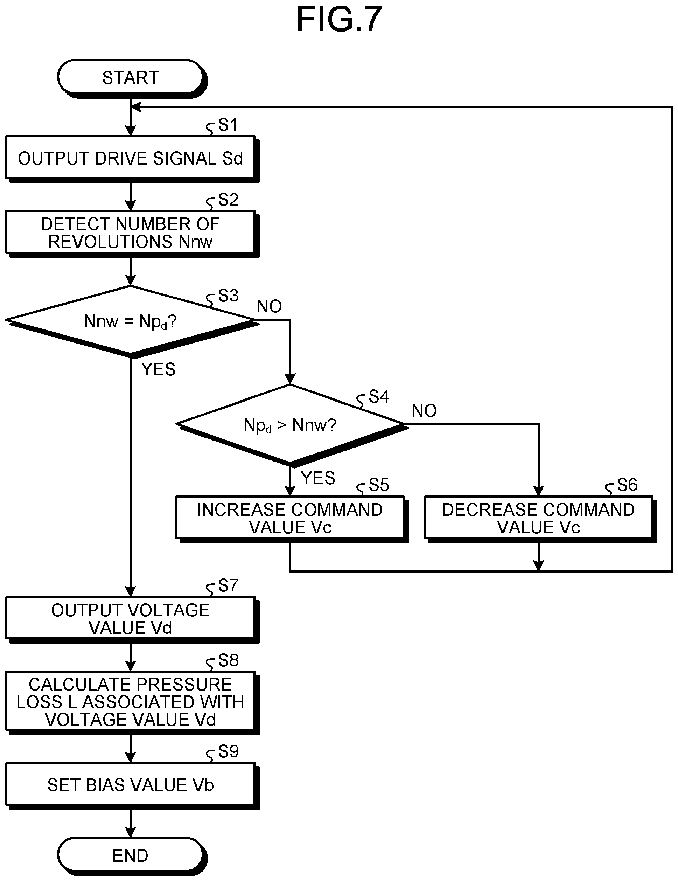

FIG. 7 is a flowchart illustrating an operating procedure performed by the ventilation apparatus illustrated in FIG. 1 at the time of installation of the ventilation apparatus. The operation using the procedure illustrated in FIG. 7 is an operation of the ventilation apparatus 100 when the ventilation apparatus 100 is installed at an installation location, and is an operation for determining the pressure loss L and setting the bias value Vb. The operation using the procedure illustrated in FIG. 7 is started, following an operation by a contractor who installs the ventilation apparatus 100.

In step S1, the drive signal generation unit 34 outputs the drive signal Sd. The drive signal Sd output here is a drive signal for a trial operation of the ventilation apparatus 100 and is a preset initial drive signal. The motor 12 is driven by the output of the drive signal Sd to the inverter 22.

In step S2, the rotational speed sensor 26 detects the number of revolutions Nnw of the motor 12. The rotational speed sensor 26 outputs the value of the number of revolutions Nnw to the rotational speed comparison unit 32. The rotational speed comparison unit 32 reads the value of the number of revolutions Np_{d} described above from the storage unit 36.

In step S3, the rotational speed comparison unit 32 determines whether or not the number of revolutions Nnw is the same as the read number of revolutions Np_{d}. If it is determined that the number of revolutions Nnw is different from the number of revolutions Np_{d} (step S3, No), the rotational speed comparison unit 32 determines in step S4, whether or not the number of revolutions Nnw is smaller than the number of revolutions Np_{d}.

If it is determined that the number of revolutions Nnw is smaller than the number of revolutions Np_{d} (step S4, Yes), in step S5, the voltage value calculator 33 increases the voltage command value Vc by adding a preset adjustment value to the current command value Vc. The voltage value calculator 33 outputs the command value Vc subjected to the adjustment by addition to the drive signal generation unit 34.

On the other hand, if it is determined that the number of revolutions Nnw is equal to or higher than the number of revolutions Np_{d} (step S4, No), in step S6, the voltage value calculator 33 decreases the voltage command value Vc by subtracting a preset adjustment value from the current command value Vc. The voltage value calculator 33 outputs the command value Vc subjected to the adjustment by subtraction to the drive signal generation unit 34.

When step S5 or step S6 is finished, the ventilation apparatus 100 returns the procedure to step S1. The drive signal generation unit 34 generates the drive signal Sd according to the command value Vc subjected to the adjustment in step S5 or step S6.

If it is determined in step S3 that the number of revolutions Nnw is the same as the number of revolutions Np_{d} (step S3, Yes), the voltage value calculator 33 sets the current command value Vc as a voltage value Vd for determining the pressure loss L. In step S7, the voltage value calculator 33 outputs the voltage value Vd for determining the pressure loss L to the pressure loss calculator 35.

In step S8, the pressure loss calculator 35 refers to the relationship between the voltage and the pressure loss illustrated in FIG. 5, thereby calculating the pressure loss L associated with the voltage value Vd. The pressure loss calculator 35 determines the value of the pressure loss L associated with the voltage value Vd from the values of the pressure losses L₁, L₂, ... stored in the storage unit 36. The pressure loss calculator 35 calculates the pressure loss L by reading the determined value from the storage unit 36. The pressure loss calculator 35 holds the calculated pressure loss L.

In step S9, the bias value instruction unit 38 sets the bias value Vb. The bias value Vb is input to the bias value instruction unit 38 by an operation of the contractor. The contractor can input any bias value Vb depending on the necessity or nonnecessity of fine adjustment of air volume from a preset operating air volume and adjustment width of air volume from the preset operating air volume. The bias value instruction unit 38 sets the bias value Vb by holding the input bias value Vb. Thus, the ventilation apparatus 100 completes the operation using the procedure illustrated in FIG. 7.

If adjustment to increase air volume from the preset operating air volume is performed, a positive value is set as the bias value Vb. If adjustment to decrease air volume from the preset operating air volume is performed, a negative value is set as the bias value Vb. If no adjustment of air volume from the preset operating air volume is performed, zero is set as the bias value Vb.

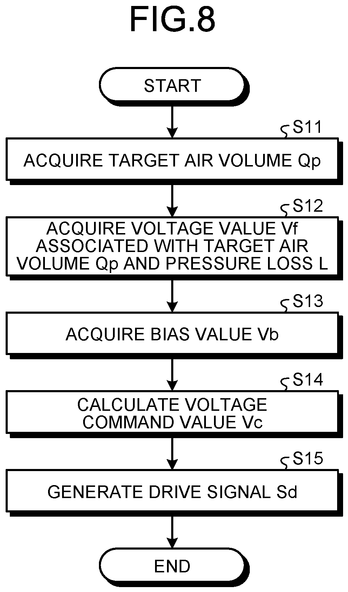

FIG. 8 is a flowchart illustrating an operating procedure performed by the ventilation apparatus illustrated in FIG. 1 at the time of operation for ventilation. The operation using the procedure illustrated in FIG. 8 is an operation of the ventilation apparatus 100 after the ventilation apparatus 100 is installed at the installation location. The operation using the procedure illustrated in FIG. 8 is started, following an operation by a user using the ventilation apparatus 100.

When the target air volume Qp is input to the target air volume input unit 31, the target air volume input unit 31 outputs the target air volume Qp to the voltage value calculator 33. Thus, in step S11, the voltage value calculator 33 acquires the target air volume Qp.

In step S12, the voltage value calculator 33 acquires a voltage value Vf associated with the target air volume Qp and the pressure loss L by referring to the relationships between the operating air volume, the pressure loss, and the voltage illustrated in FIG. 6. The voltage value calculator 33 determines a voltage value, associated with an operating air volume corresponding to the target air volume Qp among the operating air volumes Q₁, Q₂,... stored in the storage unit 36 and the value of the pressure loss L read from the pressure loss calculator 35. The voltage value calculator 33 acquires the voltage value Vf by reading the determined value from the storage unit 36.

The bias value instruction unit 38 outputs the bias value Vb set in step S9 described above to the voltage value calculator 33. Thus, in step S13, the voltage value calculator 33 acquires the bias value Vb.

In step S14, the voltage value calculator 33 calculates the voltage command value Vc, by adjusting the voltage value Vf acquired in step S12 based on the bias value Vb. The voltage value calculator 33 adjusts the voltage value Vf by adding the bias value Vb to the voltage value Vf. The voltage value calculator 33 sets the result of addition of the voltage value Vf and the bias value Vb as the command value Vc. The voltage value calculator 33 outputs the command value Vc to the drive signal generation unit 34.

In step S15, the drive signal generation unit 34 generates the drive signal Sd according to the command value Vc. The drive signal generation unit 34 outputs the generated drive signal Sd to the inverter 22. Thus, the ventilation apparatus 100 completes the operation using the procedure illustrated in FIG. 8.

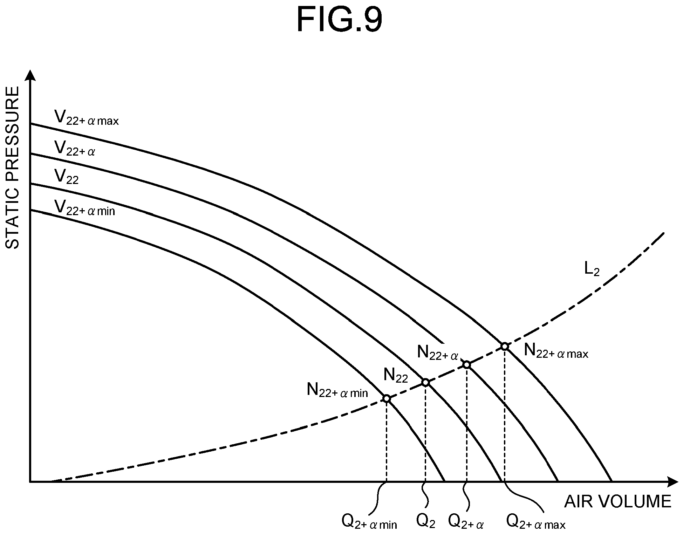

FIG. 9 is a diagram for explaining operating point changes caused by the setting of the bias value to the ventilation apparatus illustrated in FIG. 1. FIG. 9 illustrates a graph showing the pressure loss L together with a graph showing the relationship between static pressure and air volume. The points of intersection of the graph of the relationship between static pressure and air volume and the graph of the pressure loss L represent operating points of the fan 11. Here, a case with the operating air volume Q₂ is taken as an example where the pressure loss L calculated in step S8 described above is L₂, the voltage value Vf acquired in step S12 described above is V₂₂, and a fine adjustment of air volume from the operating air volume Q₂ is performed by the setting of the bias value Vb. In the following description, an air volume produced by the operation of the fan 11 is sometimes referred to as an operating air volume.

When the command value Vc is V₂₂, that is, when the bias value Vb is not set, the fan 11 operates at the operating air volume Q₂. At this time, the number of revolutions of the motor 12 is N₂₂. In this case, assume that the command value Vc is adjusted from V₂₂ to V_{22+α} by a positive bias value Vb being added to V₂₂, which is the voltage value Vf. By the addition of the bias value Vb, the operating air volume increases from the operating air volume Q₂ to Q_{2+α}. The number of revolutions of the motor 12 increases from N₂₂ to N_{22+α}.

V_{22+αmax} is the sum of the maximum value of the bias value Vb and V₂₂. The maximum value of the bias value Vb is a positive value. V_{22+αmin} is the sum of the minimum value of the bias value Vb and V₂₂. The minimum value of the bias value Vb is a negative value. By the bias value Vb being set, the ventilation apparatus 100 can adjust the operating air volume in the range of Q_{2+αmax} to Q_{2+αmin}. The number of revolutions of the motor 12 changes in the range of N_{22+αmax} to N_{22+αmin} according to the bias value Vb. Q_{2+αmax} is an operating air volume when the command value Vc is V_{22+αmax}. Q_{2+αmin} is an operating air volume when the command value Vc is V_{22+αmin}. N_{22+αmax} is the number of revolutions when the command value Vc is V_{22+αmax}. N_{22+αmin} is the number of revolutions when the command value Vc is V_{22+αmin}.

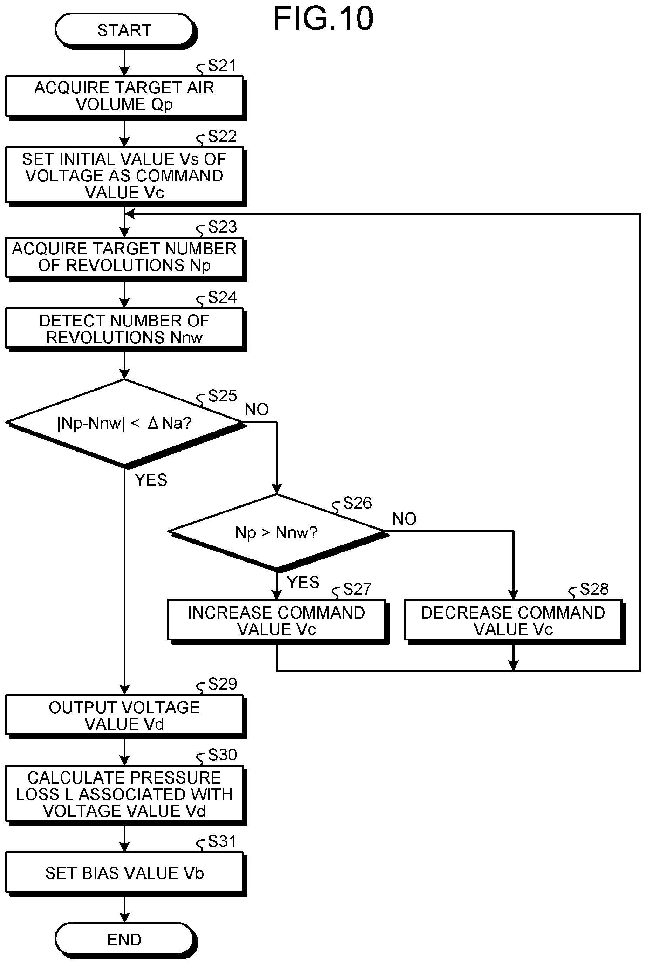

Next, a modification of the operation by the ventilation apparatus 100 will be described. FIG. 10 is a flowchart for explaining a modification of the operation by the ventilation apparatus illustrated in FIG. 1. An operating procedure illustrated in FIG. 10 is an operating procedure performed by the ventilation apparatus 100 when the ventilation apparatus 100 is installed, and is a modification of the operating procedure illustrated in FIG. 7. In the present modification, the target number of revolutions Np is acquired based on the relationships between the operating air volume, the voltage, and the number of revolutions, and the current number of revolutions Nnw is compared with the target number of revolutions Np.

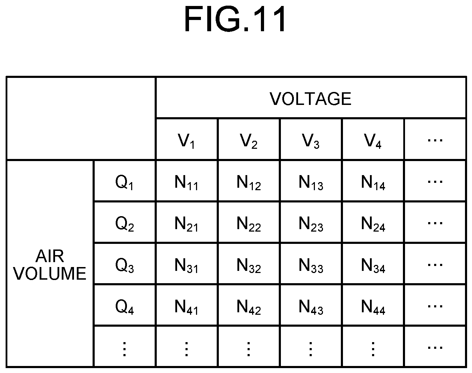

FIG. 11 is a diagram illustrating an example of the relationships between the operating air volume, the voltage, and the number of revolutions in the ventilation apparatus illustrated in FIG. 1. FIG. 11 illustrates data in which operating air volume values, voltage values, and values of the number of revolutions are associated with each other. The data illustrated in FIG. 11 is acquired on the basis of the relationships illustrated in FIG. 4. The data illustrated in FIG. 11 is stored in the storage unit 36. The data illustrated in FIG. 11 is used to acquire the target number of revolutions Np associated with the target air volume Qp and the voltage command value Vc.

When the target air volume Qp is input to the target air volume input unit 31, the target air volume input unit 31 outputs the target air volume Qp to the voltage value calculator 33. Thus, in step S21 illustrated in FIG. 10, the voltage value calculator 33 acquires the target air volume Qp. In step S22, the voltage value calculator 33 sets an initial value Vs of voltage as the command value Vc. The initial value Vs is a voltage value preset for a trial operation of the ventilation apparatus 100.

In step S23, the target air volume input unit 31 acquires the target number of revolutions Np. The target air volume input unit 31 refers to the relationships between the operating air volume, the voltage, and the number of revolutions illustrated in FIG. 11, thereby acquiring the target number of revolutions Np that is the number of revolutions corresponding to the command value Vc and the target air volume Qp. The target air volume input unit 31 outputs the acquired target number of revolutions Np to the rotational speed comparison unit 32.

In step S24, the rotational speed sensor 26 detects the number of revolutions Nnw of the motor 12. The rotational speed sensor 26 outputs the value of the number of revolutions Nnw to the rotational speed comparison unit 32. In step S25, the rotational speed comparison unit 32 determines whether or not |Np-Nnw| that is the absolute value of a difference between the target number of revolutions Np and the detected number of revolutions Nnw is less than a threshold ΔNa. The threshold ΔNa is a threshold for determining whether or not the difference of the number of revolutions Nnw with respect to the target number of revolutions Np is not a difference large enough to affect the calculation of the pressure loss L, and is a preset threshold.

If it is determined that |Np-Nnw| is equal to or larger than the threshold ΔNa (step S25, No), in step S26, the rotational speed comparison unit 32 determines whether or not the number of revolutions Nnw is smaller than the target number of revolutions Np. If it is determined that the number of revolutions Nnw is smaller than the target number of revolutions Np (step S26, Yes), in step S27, the voltage value calculator 33 increases the voltage command value Vc by adding a preset adjustment value to the current command value Vc. The voltage value calculator 33 outputs the command value Vc subjected to the adjustment by addition, to the drive signal generation unit 34.

On the other hand, if it is determined that the number of revolutions Nnw is equal to or larger than the target number of revolutions Np (step S26, No), in step S28, the voltage value calculator 33 decreases the voltage command value Vc by subtracting a preset adjustment value from the current command value Vc. The voltage value calculator 33 outputs the command value Vc subjected to the adjustment by subtraction, to the drive signal generation unit 34.

The drive signal generation unit 34 generates the drive signal Sd according to the command value Vc subjected to the adjustment in step S27 or step S28. When step S27 or step S28 is finished, the ventilation apparatus 100 returns the procedure to step S23.

If it is determined in step S25 described above that |Np-Nnw| is less than the threshold ΔNa (step S25, Yes), the voltage value calculator 33 sets the current command value Vc as the voltage value Vd that is used for determining the pressure loss. In step S29, the voltage value calculator 33 outputs the voltage value Vd that is used for determining the pressure loss to the pressure loss calculator 35.

In the present modification, the data illustrated in FIG. 5 is set for each value of the number of revolutions included in the data illustrated in FIG. 11. In step S30, the pressure loss calculator 35 refers to the relationship between the voltage set for the target number of revolutions Np and the pressure loss, thereby calculating the pressure loss L associated with the voltage value Vd. The pressure loss calculator 35 determines the value of the pressure loss associated with the voltage value Vd from the values L₁, L₂, ... of the pressure loss L stored in the storage unit 36. The pressure loss calculator 35 calculates the pressure loss L by reading the determined value from the storage unit 36. The pressure loss calculator 35 holds the calculated pressure loss L.

In step S31, the bias value instruction unit 38 sets the bias value Vb. The bias value Vb is input to the bias value instruction unit 38 by an operation of the contractor. The contractor can input any bias value Vb depending on the necessity or nonnecessity of fine adjustment of air volume from a preset operating air volume and adjustment width of air volume from the preset operating air volume. The bias value instruction unit 38 sets the bias value Vb by holding the input bias value Vb. Thus, the ventilation apparatus 100 completes the operation using the procedure illustrated in FIG. 10.

When the ventilation apparatus 100 performs the operation using the procedure illustrated in FIG. 7, the rotational speed comparison unit 32 may also determine whether or not |Np-Nnw| is less than the threshold ΔNa as in step S25 instead of the determination in step S3 described above. In the first embodiment, the bias value Vb is input from the external terminal 15 to the control device 13, and the ventilation apparatus 100 calculates the command value Vc adjusted based on the bias value Vb, thereby performing fine adjustment of air volume from a preset operating air volume. The ventilation apparatus 100 may cause a signal corresponding to the bias value Vb to be directly input to a voltage adjustment means provided in the processing circuitry to control the voltage adjustment means, thereby performing fine adjustment of air volume. The voltage adjustment means may be a variable resistor.

According to the first embodiment, the ventilation apparatus 100 calculates the command value of voltage to be applied to the motor 12, by adjusting a voltage value associated with an operating air volume on which the ventilation apparatus 100 is instructed and a pressure loss in an environment where the ventilation apparatus 100 is installed, based on the bias value Vb. Consequently, the ventilation apparatus 100 has the effect of allowing a fine adjustment of air volume from an operating air volume preset in the ventilation apparatus 100.

### Second Embodiment.

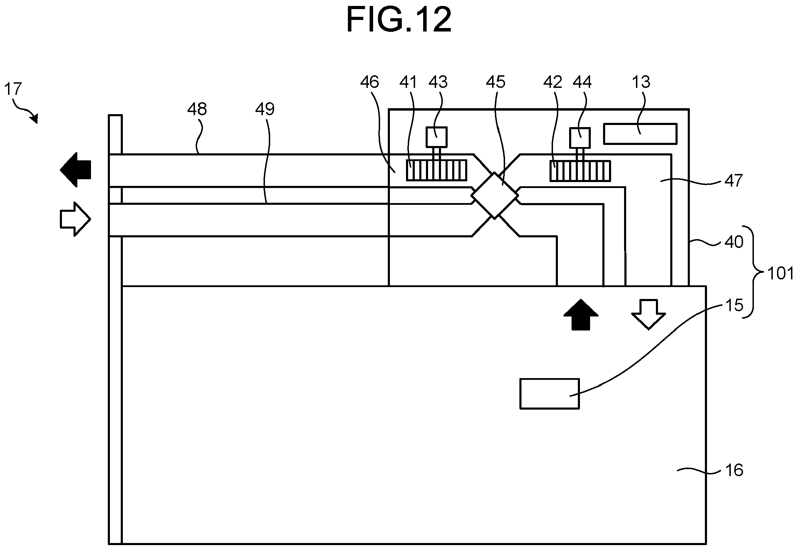

FIG. 12 is a diagram illustrating a schematic configuration of a ventilation apparatus according to a second embodiment of the present invention. A ventilation apparatus 101 according to the second embodiment is a heat exchange ventilation apparatus that performs ventilation while performing heat exchange between supply air flow and exhaust air flow. The ventilation apparatus 101 ventilates the room 16 by sending air in the room 16 to the outside 17 via an air exhaust duct 48 and taking air on the outside 17 into the room 16 via an air supply duct 49. In the second embodiment, the same reference numerals are assigned to the same components as those in the first embodiment, and a configuration different from that of the first embodiment will be mainly described.

The ventilation apparatus 101 includes a main body 40 and the external terminal 15. The main body 40 includes an air exhaust fan 41 that is a fan equipped with a motor 43, an air supply fan 42 that is a fan equipped with a motor 44, and the control device 13. The air exhaust fan 41 is provided in an exhaust air passage 46 in the main body 40. The air exhaust fan 41 generates exhaust air flow by the drive of the motor 43. The exhaust air flow is air flow from the room 16 to the outside 17. The air supply fan 42 is provided in a supply air passage 47 in the main body 40. The air supply fan 42 generates supply air flow by the drive of the motor 44. The supply air flow is air flow from the outside 17 into the room 16.

A heat exchanger 45 is provided in a position where the exhaust air passage 46 and the supply air passage 47 intersect. The heat exchanger 45 performs total heat exchange between the supply air flow and the exhaust air flow. The ventilation apparatus 101 maintains a comfortable air environment in the room 16 by ventilating the room 16. By the heat exchange between the supply air flow and the exhaust air flow, the ventilation apparatus 101 reduces the temperature difference between the air taken into the room 16 and the air in the room 16, reducing air conditioning load in the room 16.

In the ventilation apparatus 101, operating air volumes that are exhaust air flow volumes and supply air flow volumes are preset. The voltage value calculator 33 illustrated in FIG. 3 acquires a voltage value associated with an operating air volume on which the ventilation apparatus 101 is instructed and a pressure loss in an environment where the ventilation apparatus 101 is installed. The voltage value calculator 33 calculates a voltage command value to be applied to the motors 43 and 44, by adjusting the acquired voltage value based on the bias value Vb.

Like the ventilation apparatus 100 according to the first embodiment, the ventilation apparatus 101 according to the second embodiment calculates the voltage command value to be applied to the motors 43 and 44, by adjusting the voltage value associated with the operating air volume on which the ventilation apparatus 101 is instructed and the pressure loss in the environment where the ventilation apparatus 101 is installed, based on the bias value Vb. Consequently, the ventilation apparatus 101 has the effect of allowing a fine adjustment of air volume from an operating air volume preset in the ventilation apparatus 101.

The configurations illustrated in the above embodiments illustrate an example of the subject matter of the present invention, and can be combined with another known art, and can be partly omitted or changed without departing from the scope of the present invention.

### Reference Signs List

10, 40 main body; 11 fan; 12, 43, 44 motor; 13 control device; 14 air passage; 15 external terminal; 16 room; 17 outside; 18 duct; 20 commercial power supply; 21 converter; 22 inverter; 23 capacitor; 24 memory; 25 processor; 26 rotational speed sensor; 31 target air volume input unit; 32 rotational speed comparison unit; 33 voltage value calculator; 34 drive signal generation unit; 35 pressure loss calculator; 36 storage unit; 37 air volume instruction unit; 38 bias value instruction unit; 41 air exhaust fan; 42 air supply fan; 45 heat exchanger; 46 exhaust air passage; 47 supply air passage; 48 air exhaust duct; 49 air supply duct; 100, 101 ventilation apparatus.

## Claims

1. A ventilation apparatus including a fan to generate air flow by drive of a motor, to ventilate a room by generating the air flow, the ventilation apparatus comprising:
a voltage value calculator to acquire a voltage value associated with an operating air volume on which the ventilation apparatus is instructed and a pressure loss in an environment where the ventilation apparatus is installed by referring to relationships between an operating air volume preset in the ventilation apparatus, a pressure loss in a flow passage through which the air flow moves, and a voltage applied to the motor, to calculate a command value of the voltage; and
a bias value instruction unit to provide an instruction on a bias value that is a voltage adjustment amount for air volume adjustment from the operating air volume on which the ventilation apparatus is instructed, wherein
the voltage value calculator calculates the command value by adjusting the acquired voltage value based on the bias value.

2. The ventilation apparatus according to claim 1, further comprising a pressure loss calculator to calculate the pressure loss in the environment where the ventilation apparatus is installed by referring to a relationship between the pressure loss and the voltage when the number of revolutions of the motor is a specific number of revolutions.

3. The ventilation apparatus according to claim 1, further comprising:
a target air volume input unit to which a target air volume that is an operating air volume determined from the preset operating air volume is input, and acquire a target number of revolutions that is a number of revolutions of the motor associated with the target air volume; and
a pressure loss calculator to calculate the pressure loss in the environment where the ventilation apparatus is installed by referring to a relationship between the pressure loss and the voltage where the number of revolutions of the motor is the target number of revolutions.

4. A method of controlling a ventilation apparatus including a fan to generate air flow by drive of a motor, executed by a control device to control the ventilation apparatus, the method comprising:
a step of acquiring a target air volume that is an operating air volume determined from an operating air volume preset in the ventilation apparatus;
a step of acquiring a voltage value associated with a pressure loss in an environment where the ventilation apparatus is installed and the target air volume by referring to relationships between the preset operating air volume, a pressure loss in a flow passage through which the air flow moves, and a voltage applied to the motor;
a step of acquiring a bias value that is a voltage adjustment amount for air volume adjustment from the target air volume; and
a step of calculating a command value of the voltage by adjusting the acquired voltage value based on the bias value.
